(19) Europäisches Patentamt
European Patent Office
Office européen des brevets

(11) EP 3 408 317 B1

(12) **FASCICULE DE BREVET EUROPEEN**

(45) Date de publication et mention de la délivrance du brevet:
**24.04.2024 Bulletin 2024/17**

(21) Numéro de dépôt: **17706847.5**

(22) Date de dépôt: **27.01.2017**

(51) Classification Internationale des Brevets (IPC):
***C08J 9/00*** (2006.01) ***C08J 9/12*** (2006.01)
***C08J 9/14*** (2006.01) ***C08G 69/40*** (2006.01)
***C08G 101/00*** (2006.01)

(52) Classification Coopérative des Brevets (CPC):
**C08G 69/40; C08J 9/122;** C08G 2110/0066; C08J 9/0061; C08J 2203/06; C08J 2377/00; C08J 2423/08; C08J 2431/04; C08J 2433/00; C08J 2433/08; C08J 2433/10

(86) Numéro de dépôt international:
**PCT/FR2017/050187**

(87) Numéro de publication internationale:
**WO 2017/129913 (03.08.2017 Gazette 2017/31)**

# (54) MOUSSE DE COPOLYMÈRE À BLOCS POLYAMIDES ET À BLOCS POLYÉTHERS

SCHAUM AUS EINEM COPOLYMER AUS POLYAMIDBLÖCKEN UND POLYETHERBLÖCKEN

FOAM OF A COPOLYMER OF POLYAMIDE BLOCKS AND POLYETHER BLOCKS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.01.2016 FR 1650719**

(43) Date de publication de la demande:
**05.12.2018 Bulletin 2018/49**

(73) Titulaire: **Arkema France**
**92700 Colombes (FR)**

(72) Inventeurs:
- **COCQUET, Clio**
  **27300 Bernay (FR)**
- **PINEAU, Quentin**
  **27000 Evreux (FR)**
- **LOYEN, Karine**
  **27500 Pont-Audemer (FR)**
- **FERNAGUT, François**
  **27120 Le Val-David (FR)**
- **CHEMINET, Helena**
  **27300 Saint-Martin-du-Tilleul (FR)**

(74) Mandataire: **Bandpay & Greuter**
**11 rue Christophe Colomb**
**75008 Paris (FR)**

(56) Documents cités:
**EP-A1- 0 459 862**
**EP-A2- 0 402 883**
**EP-A2- 0 405 227**
**US-A- 4 331 786**

Remarques:
Le dossier contient des informations techniques présentées postérieurement au dépôt de la demande et ne figurant pas dans le présent fascicule.

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 408 317 B1

## Description

DOMAINE DE L'INVENTION

La présente invention concerne une mousse formée à partir d'un copolymère à blocs polyamides et à blocs polyéthers ainsi qu'un procédé de fabrication de celle-ci.

ARRIERE-PLAN TECHNIQUE

Diverses mousses polymères sont utilisées notamment dans le domaine des équipements sportifs, tels que des semelles ou composants de semelles, des gants, raquettes ou balles de golf, des éléments de protection individuelle en particulier pour la pratique du sport (gilets, pièces intérieures de casques, de coques...).

De telles applications nécessitent un ensemble de propriétés physiques particulières assurant une aptitude au rebond, une faible déformation permanente en compression et une aptitude à endurer des impacts répétés sans se déformer et à revenir à la forme initiale.

Les documents EP 0405227 et EP 0402883 décrivent des mousses fabriquées à partir de divers polymères et leur utilisation dans des semelles de chaussures.

Le document EP 1650255 décrit des mousses réticulées obtenues à partir de copolymères à blocs polyamides et blocs polyéthers.

Les mousses réticulées ont pour inconvénient de présenter des contraintes importantes d'un point de vue du procédé de fabrication : la durée de fabrication est généralement élevée, la fabrication est généralement nécessairement en mode discontinu (batch) uniquement, et des produits chimiques indésirables doivent être manipulés.

En outre, des mousses réticulées sont difficilement recyclables après utilisation.

Le document WO 2013/148841 décrit un procédé d'extrusion bicouche à partir de divers polymères, dont les copolymères à blocs polyamides et blocs polyéthers.

Le document WO 2015/052265 décrit un procédé de fabrication de particules thermoplastiques expansées à partir d'un quelconque polymère thermoplastique élastomère.

Par ailleurs, la société Zotefoams commercialise des mousses réticulées fabriquées à partir de copolymères à blocs polyamides et blocs polyéthers, sous le nom ZOTEK®PEBA. Les inconvénients de la réticulation ont été rappelés ci-dessus. De plus, la durabilité des produits est imparfaite.

Il existe également de nombreuses mousses fabriquées à partir de polyuréthane thermoplastique (TPU) ou d'éthylène-acétate de vinyle (EVA). Ces mousses présentent une gamme de température d'utilisation relativement restreinte, ainsi qu'une déformation rémanente en compression aux temps courts qui est relativement faible, et une durabilité imparfaite. Leurs procédés de fabrication sont en outre contraignants.

Il existe donc un besoin de fournir des mousses polymères de faible densité, ayant une ou plusieurs propriétés avantageuses parmi : une capacité élevée à restituer de l'énergie élastique lors de sollicitations sous faible contrainte ; une faible déformation rémanente en compression ; et une résistance élevée à la fatigue en compression.

RESUME DE L'INVENTION

L'invention concerne en premier lieu une mousse de copolymère à blocs polyamides et à blocs polyéthers non réticulé, dans laquelle :

- les blocs polyamides du copolymère ont une masse molaire moyenne en nombre de 200 à 1500 g/mol ;
- les blocs polyéthers du copolymère ont une masse molaire moyenne en nombre de 800 à 2500 g/mol ; et
- le rapport massique des blocs polyamides par rapport aux blocs polyéthers du copolymère est de 0,1 à 0,7, le rapport massique étant calculé en divisant la masse molaire moyenne en nombre des blocs polyamides par la masse molaire moyenne en nombre des blocs polyéthers.

Selon un mode de réalisation :

- les blocs polyamides du copolymère ont une masse molaire moyenne en nombre de 400 à 1000 g/mol, de préférence de 600 à 850 g/mol ;
- les blocs polyéthers du copolymère ont une masse molaire moyenne en nombre de 1000 à 2000 g/mol ; et
- le rapport massique des blocs polyamides par rapport aux blocs polyéthers du copolymère est de 0,3 à 0,6.

Selon un mode de réalisation, les blocs polyamides du copolymère sont des blocs de polyamide 11, ou de polyamide 12, ou de polyamide 6, ou de polyamide 6.10.

Selon un mode de réalisation, les blocs polyéthers du copolymère sont des blocs de polyéthylène glycol ou de polytétrahydrofurane.

Selon un mode de réalisation, la mousse présente une densité inférieure ou égale à 800 kg/$m^3$, de préférence inférieure ou égale à 600 kg/$m^3$, de manière plus particulièrement préférée inférieure ou égale à 400 kg/$m^3$, voire inférieure ou égale à 300 kg/$m^3$.

Selon un mode de réalisation, la mousse contient également un ou plusieurs additifs, de préférence choisis parmi les copolymères d'éthylène et acétate de vinyle, les copolymères d'éthylène et d'acrylate, et les copolymères d'éthylène et d'alkyl(méth)acrylate.

L'invention concerne aussi un procédé de fabrication de cette mousse, comprenant une étape de mélange du copolymère à l'état fondu, éventuellement avec un ou des additifs, et avec un agent d'expansion, et une étape de moussage du mélange de copolymère et d'agent d'expansion.

Selon un mode de réalisation, l'agent d'expansion est un agent d'expansion physique, de préférence choisi parmi le diazote, le dioxyde de carbone, les hydrocarbures, les chloroflurocarbures, les hydrochlorocarbures, les hydrofluorocarbures et les hydrochlorofluorocarbures.

Selon un mode de réalisation, le procédé comprend une étape d'injection du mélange de copolymère et d'agent d'expansion dans un moule, le moussage du mélange étant effectué par l'ouverture du moule.

L'invention concerne également un article constitué de la mousse ci-dessus.

L'invention concerne également un article comprenant au moins un élément constitué de la mousse ci-dessus.

Selon un mode de réalisation, l'article de l'invention est choisi parmi les semelles de chaussures de sport, les ballons ou balles, les gants, les équipements de protection individuels, les semelles pour rails, les pièces automobiles, les pièces de construction et les pièces d'équipements électriques et électroniques.

La présente invention permet de surmonter les inconvénients de l'état de la technique. Elle fournit plus particulièrement des mousses polymères de faible densité, ayant une ou plusieurs propriétés avantageuses parmi : une capacité élevée à restituer de l'énergie élastique lors de sollicitations sous faible contrainte ; une faible déformation rémanente en compression ; et une résistance élevée à la fatigue en compression.

De manière avantageuse, ces propriétés sont obtenues sur une large gamme de température, de préférence de -20°C à 50°C, voire de -30°C à 80°C.

Cela est accompli grâce à l'utilisation d'un copolymère à blocs polyamides et à blocs polyéthers non réticulé, caractérisé par des gammes particulières de masse molaire pour les blocs polyamides et les blocs polyéthers, ainsi qu'une gamme particulière de rapport massique entre les blocs polyamides et les blocs polyéthers.

## BREVE DESCRIPTION DES FIGURES

La **figure 1** représente les résultats de mesures de déformation rémanente après un test fatigue effectué sur une mousse selon l'invention et sur une mousse témoin (voir l'exemple 2). Le temps de relaxation (en heures) figure en abscisse, et le pourcentage de déformation résiduelle est indiqué en ordonnée.

## DESCRIPTION DE MODES DE REALISATION DE L'INVENTION

L'invention est maintenant décrite plus en détail et de façon non limitative dans la description qui suit.

L'invention utilise un copolymère à blocs polyamides et à blocs polyéthers, ou « PEBA ».

Les PEBA résultent de la polycondensation de blocs polyamides à extrémités réactives avec des blocs polyéthers à extrémités réactives, telle que, entre autres la polycondensation :

1) de blocs polyamides à bouts de chaîne diamines avec des blocs polyoxyalkylènes à bouts de chaînes dicarboxyliques ;
2) de blocs polyamides à bouts de chaînes dicarboxyliques avec des blocs polyoxyalkylènes à bouts de chaînes diamines, obtenues par exemple par cyanoéthylation et hydrogénation de blocs polyoxyalkylène $\alpha,\omega$-dihydroxylées aliphatiques appelés polyétherdiols ;
3) de blocs polyamides à bouts de chaînes dicarboxyliques avec des polyétherdiols, les produits obtenus étant, dans ce cas particulier, des polyétheresteramides.

Les blocs polyamides à bouts de chaînes dicarboxyliques proviennent, par exemple, de la condensation de précurseurs de polyamides en présence d'un diacide carboxylique limiteur de chaîne. Les blocs polyamides à bouts de chaînes diamines proviennent par exemple de la condensation de précurseurs de polyamides en présence d'une diamine limiteur de chaîne.

On peut utiliser avantageusement trois types de blocs polyamides.

Selon un premier type, les blocs polyamides proviennent de la condensation d'un diacide carboxylique, en

particulier ceux ayant de 4 à 20 atomes de carbone, de préférence ceux ayant de 6 à 18 atomes de carbone, et d'une diamine aliphatique ou aromatique, en particulier celles ayant de 2 à 20 atomes de carbone, de préférence celles ayant de 6 à 14 atomes de carbone.

A titre d'exemples d'acides dicarboxyliques, on peut citer l'acide 1,4-cyclohexyldicarboxylique, les acides butanedioïque, adipique, azélaïque, subérique, sébacique, dodécanedicarboxylique, octadécanedicarboxylique et les acides téréphtalique et isophtalique, mais aussi les acides gras dimérisés.

A titre d'exemples de diamines, on peut citer la tétraméthylène diamine, l'hexaméthylènediamine, la 1,10-décaméthylènediamine, la dodécaméthylènediamine, la triméthylhexaméthylène diamine, les isomères des bis-(4-aminocyclohexyl)-méthane (BACM), bis-(3-méthyl-4-aminocyclohexyl)méthane (BMACM), et 2-2-bis-(3-méthyl-4-aminocyclohexyl)-propane (BMACP), le para-amino-di-cyclo-hexyl-méthane (PACM), l'isophoronediamine (IPDA), la 2,6-bis-(aminométhyl)-norbornane (BAMN) et la pipérazine (Pip).

Avantageusement, des blocs polyamides PA 4.12, PA 4.14, PA 4.18, PA 6.10, PA 6.12, PA 6.14, PA 6.18, PA 9.12, PA 10.10, PA 10.12, PA 10.14 et PA 10.18 sont utilisés. Dans la notation PA X.Y, X représente le nombre d'atomes de carbone issu des résidus de diamine, et Y représente le nombre d'atomes de carbone issu des résidus de diacide, de façon conventionnelle.

Selon un deuxième type, les blocs polyamides résultent de la condensation d'un ou plusieurs acides $\alpha,\omega$-aminocarboxyliques et/ou d'un ou plusieurs lactames ayant de 6 à 12 atomes de carbone en présence d'un diacide carboxylique ayant de 4 à 12 atomes de carbone ou d'une diamine. A titre d'exemples de lactames, on peut citer le caprolactame, l'oenantholactame et le lauryllactame. A titre d'exemples d'acide $\alpha,\omega$-amino carboxylique, on peut citer les acides aminocaproïque, amino-7-heptanoïque, amino-11-undécanoïque et amino-12-dodécanoïque.

Avantageusement les blocs polyamides du deuxième type sont des blocs de PA 11 (polyundécanamide), de PA 12 (polydodécanamide) ou de PA 6 (polycaprolactame). Dans la notation PA X, X représente le nombre d'atomes de carbone issus des résidus d'aminoacide.

Selon un troisième type, les blocs polyamides résultent de la condensation d'au moins un acide $\alpha,\omega$-amino-carboxylique (ou un lactame), au moins une diamine et au moins un diacide carboxylique.

Dans ce cas, on prépare les blocs polyamide PA par polycondensation :

- de la ou des diamines aliphatiques linéaires ou aromatiques ayant X atomes de carbone ;
- du ou des diacides carboxyliques ayant Y atomes de carbone ; et
- du ou des comonomères {Z}, choisis parmi les lactames et les acides $\alpha,\omega$-aminocarboxyliques ayant Z atomes de carbone et les mélanges équimolaires d'au moins une diamine ayant X1 atomes de carbone et d'au moins un diacide carboxylique ayant Y1 atomes de carbones, (X1, Y1) étant différent de (X, Y),
- ledit ou lesdits comonomères {Z} étant introduits dans une proportion pondérale allant avantageusement jusqu'à 50%, de préférence jusqu'à 20%, encore plus avantageusement jusqu'à 10% par rapport à l'ensemble des monomères précurseurs de polyamide ;
- en présence d'un limiteur de chaîne choisi parmi les diacides carboxyliques.

Avantageusement, on utilise comme limiteur de chaîne le diacide carboxylique ayant Y atomes de carbone, que l'on introduit en excès par rapport à la stoechiométrie de la ou des diamines.

Selon une variante de ce troisième type, les blocs polyamides résultent de la condensation d'au moins deux acides $\alpha,\omega$-aminocarboxyliques ou d'au moins deux lactames ayant de 6 à 12 atomes de carbone ou d'un lactame et d'un acide aminocarboxylique n'ayant pas le même nombre d'atomes de carbone en présence éventuelle d'un limiteur de chaîne. A titre d'exemples d'acide $\alpha,\omega$-aminocarboxylique aliphatique, on peut citer les acides aminocaproïques, amino-7-heptanoïque, amino-11-undécanoïque et amino-12-dodécanoïque. A titre d'exemples de lactame, on peut citer le caprolactame, l'oenantholactame et le lauryllactame. A titre d'exemples de diamines aliphatiques, on peut citer l'hexaméthylènediamine, la dodécaméthylènediamine et la triméthylhexaméthylène diamine. A titre d'exemples de diacides cycloaliphatiques, on peut citer l'acide 1,4-cyclohexyldicarboxylique. A titre d'exemples de diacides aliphatiques, on peut citer les acides butane-dioïque, adipique, azélaïque, subérique, sébacique, dodécanedicarboxylique, les acides gras dimérisés. Ces acides gras dimérisés ont de préférence une teneur en dimère d'au moins 98% ; de préférence ils sont hydrogénés ; il s'agit par exemple des produits commercialisés sous la marque "PRIPOL" par la société "CRODA", ou sous la marque EMPOL par la société BASF, ou sous la marque Radiacid par la société OLEON, et des polyoxyalkylènes $\alpha,\omega$-diacides. A titre d'exemples de diacides aromatiques, on peut citer les acides téréphtalique (T) et isophtalique (I). A titre d'exemples de diamines cycloaliphatiques, on peut citer les isomères des bis-(4-aminocyclohexyl)-méthane (BACM), bis-(3-méthyl-4-aminocyclohexyl)méthane (BMACM) et 2-2-bis-(3-méthyl-4-aminocyclohexyl)-propane(BMACP), et le para-amino-di-cyclo-hexyl-méthane (PACM). Les autres diamines couramment utilisées peuvent être l'isophoronediamine (IPDA), la 2,6-bis-(aminométhyl)-norbornane (BAMN) et la pipérazine.

A titre d'exemples de blocs polyamides du troisième type, on peut citer les suivants :

- le PA 6.6/6, où 6.6 désigne des motifs hexaméthylènediamine condensée avec l'acide adipique et 6 désigne des motifs résultant de la condensation du caprolactame ;
- le PA 6.6/6.10/11/12, où 6.6 désigne l'hexaméthylènediamine condensée avec l'acide adipique, 6.10 désigne l'hexaméthylènediamine condensée avec l'acide sébacique, 11 désigne des motifs résultant de la condensation de l'acide aminoundécanoïque et 12 désigne des motifs résultant de la condensation du lauryllactame.

Les notations PA X/Y, PA X/Y/Z, etc. se rapportent à des copolyamides dans lesquels X, Y, Z, etc. représentent des unités homopolyamides telles que décrites ci-dessus.

Avantageusement, les blocs polyamides du copolymère utilisé dans l'invention comprennent des blocs de polyamide PA 6, PA 11, PA 12, PA 5.4, PA 5.9, PA 5.10, PA 5.12, PA 5.13, PA 5.14, PA 5.16, PA 5.18, PA 5.36, PA 6.4, PA 6.9, PA 6.10, PA 6.12, PA 6.13, PA 6.14, PA 6.16, PA 6.18, PA 6.36, PA 10.4, PA 10.9, PA 10.10, PA 10.12, PA 10.13, PA 10.14, PA 10.16, PA 10.18, PA 10.36, PA 10.T, PA 12.4, PA 12.9, PA 12.10, PA 12.12, PA 12.13, PA 12.14, PA 12.16, PA 12.18, PA 12.36, PA 12.T, ou des mélanges ou copolymères de ceux-ci ; et de préférence comprennent des blocs de polyamide PA 6, PA 11, PA 12, PA 6.10, PA 10.10, PA 10.12, ou des mélanges ou copolymères de ceux-ci.

Les blocs polyéthers sont constitués de motifs d'oxyde d'alkylène.

Les blocs polyéthers peuvent notamment être des blocs PEG (polyéthylène glycol) c'est à dire constitués de motifs oxyde d'éthylène, et/ou des blocs PPG (propylène glycol) c'est à dire constitués de motifs oxyde de propylène, et/ou des blocs PO3G (polytriméthylène glycol) c'est-à-dire constitués de motifs polytriméthylène ether de glycol, et/ou des blocs PTMG c'est à dire constitués de motifs tetraméthylène de glycol appelés aussi polytétrahydrofurane. Les copolymères PEBA peuvent comprendre dans leur chaîne plusieurs types de polyéthers, les copolyéthers pouvant être à blocs ou statistiques.

On peut également utiliser des blocs obtenus par oxyéthylation de bisphénols, tels que par exemple le bisphénol A. Ces derniers produits sont décrits notamment dans le document EP 613919.

Les blocs polyéthers peuvent aussi être constitués d'amines primaires éthoxylées. A titre d'exemple d'amines primaires éthoxylées on peut citer les produits de formule :

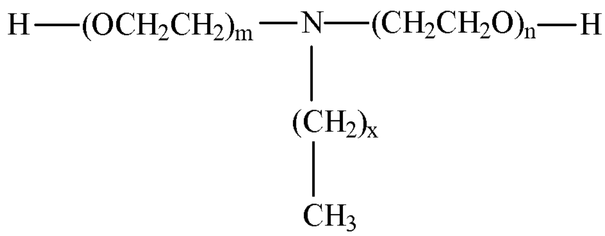

dans laquelle m et n sont des entiers compris entre 1 et 20 et x un entier compris entre 8 et 18. Ces produits sont par exemple disponibles dans le commerce sous la marque NORAMOX® de la société CECA et sous la marque GENAMIN® de la société CLARIANT.

Les blocs souples polyéthers peuvent comprendre des blocs polyoxyalkylènes à bouts de chaînes $NH_2$, de tels blocs pouvant être obtenus par cyanoacétylation de blocs polyoxyalkylène $\alpha,\omega$-dihydroxylés aliphatiques appelées polyétherdiols. Plus particulièrement, les produits commerciaux Jefifamine ou Elastamine peuvent être utilisés (par exemple Jeffamine® D400, D2000, ED 2003, XTJ 542, produits commerciaux de la société Huntsman, également décrits dans les documents JP 2004346274, JP 2004352794 et EP 1482011).

Les blocs polyétherdiols sont soit utilisés tels quels et copolycondensés avec des blocs polyamides à extrémités carboxyliques, soit aminés pour être transformés en polyéthers diamines et condensés avec des blocs polyamides à extrémités carboxyliques. La méthode générale de préparation en deux étapes des copolymères PEBA ayant des liaisons esters entre les blocs PA et les blocs PE est connue et est décrite, par exemple, dans le document FR 2846332. La méthode générale de préparation des copolymères PEBA de l'invention ayant des liaisons amides entre les blocs PA et les blocs PE est connue et décrite, par exemple dans le document EP 1482011. Les blocs polyéthers peuvent être aussi mélangés avec des précurseurs de polyamide et un limiteur de chaîne diacide pour préparer les polymères à blocs polyamides et blocs polyéthers ayant des motifs répartis de façon statistique (procédé en une étape).

Bien entendu, la désignation PEBA dans la présente description de l'invention se rapporte aussi bien aux PEBAX® commercialisés par Arkema, aux Vestamid® commercialisés par Evonik®, aux Grilamid® commercialisés par EMS, qu'aux Pelestat® type PEBA commercialisés par Sanyo ou à tout autre PEBA d'autres fournisseurs.

Si les copolymères à blocs décrits ci-dessus comprennent généralement au moins un bloc polyamide et au moins un bloc polyéther, la présente invention couvre également tous les alliages de copolymères comprenant deux, trois, quatre (voire plus) blocs différents choisis parmi ceux décrits dans la présente description, dès lors que ces blocs

comportent au moins des blocs polyamides et polyéthers.

Par exemple, l'alliage de copolymère selon l'invention peut comprendre un copolymère segmenté à blocs comprenant trois types de blocs différents (ou « tribloc »), qui résulte de la condensation de plusieurs des blocs décrits ci-dessus. Ledit tribloc est de préférence choisi parmi les copolyétheresteramides et les copolyétheramideuréthanes.

Des copolymères PEBA particulièrement préférés dans le cadre de l'invention sont les copolymères comportant des blocs :

- PA 11 et PEG ;
- PA 11 et PTMG ;
- PA 12 et PEG;
- PA 12 et PTMG ;
- PA 6.10 et PEG;
- PA 6.10 et PTMG ;
- PA 6 et PEG;
- PA 6 et PTMG.

La mousse de l'invention comporte un copolymère PEBA tel que décrit ci-dessus : de préférence un seul tel copolymère est utilisé. Il est toutefois possible d'utiliser un mélange de deux ou plus de deux copolymères PEBA tels que décrits ci-dessus.

Selon l'invention, la masse molaire moyenne en nombre des blocs polyamides dans le copolymère PEBA vaut de 200 à 1500 g/mol ; la masse molaire moyenne en nombre des blocs polyéthers vaut de 800 à 2500 g/mol ; et le rapport massique des blocs polyamides par rapport aux blocs polyéthers du copolymère est de 0,1 à 0,7.

La masse molaire moyenne en nombre est fixée par la teneur en limiteur de chaine. Elle peut être calculée selon la relation :

$$M_n = \frac{n_{monomère}}{n_{diacide}} * M.W._{motif\ de\ répétition} + M.W._{diacide}$$

Dans cette formule, $n_{monomère}$ représente le nombre de moles de monomère, $n_{diacide}$ représente le nombre de moles de limiteur diacide en excès, $MW_{motif\ de\ répétition}$ représente la masse molaire du motif de répétition, et $MW_{diacide}$ représente la masse molaire du diacide en excès.

Selon des modes de réalisation particuliers, les copolymères sont définis par les gammes de masses molaires moyennes en nombre $M_n$ suivantes :

| | $M_n$ des blocs polyamides | $M_n$ des blocs polyéthers |
|---|---|---|
| N°1 | 200 à 300 g/mol | 800 à 1000 g/mol |
| N°2 | 300 à 400 g/mol | 800 à 1000 g/mol |
| N°3 | 400 à 500 g/mol | 800 à 1000 g/mol |
| N°4 | 500 à 600 g/mol | 800 à 1000 g/mol |
| N°5 | 600 à 700 g/mol | 800 à 1000 g/mol |
| N°6 | 700 à 800 g/mol | 800 à 1000 g/mol |
| N°7 | 800 à 900 g/mol | 800 à 1000 g/mol |
| N°8 | 900 à 1000 g/mol | 800 à 1000 g/mol |
| N°9 | 200 à 300 g/mol | 1000 à 1200 g/mol |
| N°10 | 300 à 400 g/mol | 1000 à 1200 g/mol |
| N°11 | 400 à 500 g/mol | 1000 à 1200 g/mol |
| N°12 | 500 à 600 g/mol | 1000 à 1200 g/mol |
| N°13 | 600 à 700 g/mol | 1000 à 1200 g/mol |
| N°14 | 700 à 800 g/mol | 1000 à 1200 g/mol |

(suite)

| | $M_n$ des blocs polyamides | $M_n$ des blocs polyéthers |
|---|---|---|
| N°15 | 800 à 900 g/mol | 1000 à 1200 g/mol |
| N°16 | 900 à 1000 g/mol | 1000 à 1200 g/mol |
| N°17 | 1000 à 1100 g/mol | 1000 à 1200 g/mol |
| N°18 | 200 à 300 g/mol | 1200 à 1400 g/mol |
| N°19 | 300 à 400 g/mol | 1200 à 1400 g/mol |
| N°20 | 400 à 500 g/mol | 1200 à 1400 g/mol |
| N°21 | 500 à 600 g/mol | 1200 à 1400 g/mol |
| N°22 | 600 à 700 g/mol | 1200 à 1400 g/mol |
| N°23 | 700 à 800 g/mol | 1200 à 1400 g/mol |
| N°24 | 800 à 900 g/mol | 1200 à 1400 g/mol |
| N°25 | 900 à 1000 g/mol | 1200 à 1400 g/mol |
| N°26 | 1000 à 1100 g/mol | 1200 à 1400 g/mol |
| N°27 | 1100 à 1200 g/mol | 1200 à 1400 g/mol |
| N°28 | 1200 à 1300 g/mol | 1200 à 1400 g/mol |
| N°29 | 200 à 300 g/mol | 1400 à 1600 g/mol |
| N°30 | 300 à 400 g/mol | 1400 à 1600 g/mol |
| N°31 | 400 à 500 g/mol | 1400 à 1600 g/mol |
| N°32 | 500 à 600 g/mol | 1400 à 1600 g/mol |
| N°33 | 600 à 700 g/mol | 1400 à 1600 g/mol |
| N°34 | 700 à 800 g/mol | 1400 à 1600 g/mol |
| N°35 | 800 à 900 g/mol | 1400 à 1600 g/mol |
| N°36 | 900 à 1000 g/mol | 1400 à 1600 g/mol |
| N°37 | 1000 à 1100 g/mol | 1400 à 1600 g/mol |
| N°38 | 1100 à 1200 g/mol | 1400 à 1600 g/mol |
| N°39 | 1200 à 1300 g/mol | 1400 à 1600 g/mol |
| N°40 | 1300 à 1400 g/mol | 1400 à 1600 g/mol |
| N°41 | 1400 à 1500 g/mol | 1400 à 1600 g/mol |
| N°42 | 200 à 300 g/mol | 1600 à 1800 g/mol |
| N°43 | 300 à 400 g/mol | 1600 à 1800 g/mol |
| N°44 | 400 à 500 g/mol | 1600 à 1800 g/mol |
| N°45 | 500 à 600 g/mol | 1600 à 1800 g/mol |
| N°46 | 600 à 700 g/mol | 1600 à 1800 g/mol |
| N°47 | 700 à 800 g/mol | 1600 à 1800 g/mol |
| N°48 | 800 à 900 g/mol | 1600 à 1800 g/mol |
| N°49 | 900 à 1000 g/mol | 1600 à 1800 g/mol |
| N°50 | 1000 à 1100 g/mol | 1600 à 1800 g/mol |
| N°51 | 1100 à 1200 g/mol | 1600 à 1800 g/mol |
| N°52 | 1200 à 1300 g/mol | 1600 à 1800 g/mol |

(suite)

| | $M_n$ des blocs polyamides | $M_n$ des blocs polyéthers |
|---|---|---|
| N°53 | 1300 à 1400 g/mol | 1600 à 1800 g/mol |
| N°54 | 1400 à 1500 g/mol | 1600 à 1800 g/mol |
| N°55 | 200 à 300 g/mol | 1800 à 2000 g/mol |
| N°56 | 300 à 400 g/mol | 1800 à 2000 g/mol |
| N°57 | 400 à 500 g/mol | 1800 à 2000 g/mol |
| N°58 | 500 à 600 g/mol | 1800 à 2000 g/mol |
| N°59 | 600 à 700 g/mol | 1800 à 2000 g/mol |
| N°60 | 700 à 800 g/mol | 1800 à 2000 g/mol |
| N°61 | 800 à 900 g/mol | 1800 à 2000 g/mol |
| N°62 | 900 à 1000 g/mol | 1800 à 2000 g/mol |
| N°63 | 1000 à 1100 g/mol | 1800 à 2000 g/mol |
| N°64 | 1100 à 1200 g/mol | 1800 à 2000 g/mol |
| N°65 | 1200 à 1300 g/mol | 1800 à 2000 g/mol |
| N°66 | 1300 à 1400 g/mol | 1800 à 2000 g/mol |
| N°67 | 1400 à 1500 g/mol | 1800 à 2000 g/mol |
| N°68 | 200 à 300 g/mol | 2000 à 2200 g/mol |
| N°69 | 300 à 400 g/mol | 2000 à 2200 g/mol |
| N°70 | 400 à 500 g/mol | 2000 à 2200 g/mol |
| N°71 | 500 à 600 g/mol | 2000 à 2200 g/mol |
| N°72 | 600 à 700 g/mol | 2000 à 2200 g/mol |
| N°73 | 700 à 800 g/mol | 2000 à 2200 g/mol |
| N°74 | 800 à 900 g/mol | 2000 à 2200 g/mol |
| N°75 | 900 à 1000 g/mol | 2000 à 2200 g/mol |
| N°76 | 1000 à 1100 g/mol | 2000 à 2200 g/mol |
| N°77 | 1100 à 1200 g/mol | 2000 à 2200 g/mol |
| N°78 | 1200 à 1300 g/mol | 2000 à 2200 g/mol |
| N°79 | 1300 à 1400 g/mol | 2000 à 2200 g/mol |
| N°80 | 1400 à 1500 g/mol | 2000 à 2200 g/mol |
| N°81 | 200 à 300 g/mol | 2200 à 2500 g/mol |
| N°82 | 300 à 400 g/mol | 2200 à 2500 g/mol |
| N°83 | 400 à 500 g/mol | 2200 à 2500 g/mol |
| N°84 | 500 à 600 g/mol | 2200 à 2500 g/mol |
| N°85 | 600 à 700 g/mol | 2200 à 2500 g/mol |
| N°86 | 700 à 800 g/mol | 2200 à 2500 g/mol |
| N°87 | 800 à 900 g/mol | 2200 à 2500 g/mol |
| N°88 | 900 à 1000 g/mol | 2200 à 2500 g/mol |
| N°89 | 1000 à 1100 g/mol | 2200 à 2500 g/mol |
| N°90 | 1100 à 1200 g/mol | 2200 à 2500 g/mol |

(suite)

| | $M_n$ des blocs polyamides | $M_n$ des blocs polyéthers |
|---|---|---|
| N°91 | 1200 à 1300 g/mol | 2200 à 2500 g/mol |
| N°92 | 1300 à 1400 g/mol | 2200 à 2500 g/mol |
| N°93 | 1400 à 1500 g/mol | 2200 à 2500 g/mol |

En outre, selon l'invention, le rapport massique des blocs polyamides par rapport aux blocs polyéthers du copolymère est de 0,1 à 0,7. Ce rapport massique peut être calculé en divisant la masse molaire moyenne en nombre des blocs polyamides par la masse molaire moyenne en ombre des blocs polyéthers.

Selon des modes de réalisation particuliers, ce rapport vaut de 0,1 à 0,2 ; ou de 0,2 à 0,3 ; ou de 0,3 à 0,4 ; ou de 0,4 à 0,5 ; ou de 0,5 à 0,6 ; ou de 0,6 à 0,7.

De préférence, le copolymère utilisé dans l'invention présente une dureté instantanée inférieure ou égale à 40 Shore D, de préférence encore inférieure ou égale à 35 Shore D. Les mesures de dureté peuvent être effectuées selon la norme ISO 868.

Le copolymère à blocs polyamides et à blocs polyéthers est utilisé pour former une mousse, sans étape de réticulation. La mousse est formée en mélangeant le copolymère à l'état fondu avec un agent d'expansion, puis en réalisant une étape de moussage.

Selon un mode de réalisation, la mousse ainsi formée consiste essentiellement, voire consiste, en le copolymère décrit ci-dessus (ou les copolymères, si un mélange de copolymères est utilisé) et optionnellement l'agent d'expansion, si celui-ci demeure présent dans les pores de la mousse, notamment s'il s'agit d'une mousse à pores fermés.

Le copolymère à blocs polyamides et à blocs polyéthers peut être combiné à divers additifs, par exemple des copolymères d'éthylène et acétate de vinyle ou EVA (par exemple ceux commercialisés sous le nom d'Evatane® par Arkema), ou des copolymères d'éthylène et d'acrylate, ou des copolymères d'éthylène et d'alkyl(méth)acrylate, par exemple ceux commercialisé sous le nom de Lotryl® par Arkema. Ces additifs peuvent permettre d'ajuster la dureté de la pièce moussée, son aspect et son confort. Les additifs peuvent être ajoutés dans une teneur de 0 à 50 % en masse, préférentiellement de 5 à 30 % en masse, par rapport au copolymère à blocs polyamides et à blocs polyéthers.

L'agent d'expansion peut être un agent chimique ou physique. De préférence, il s'agit d'un agent physique, tel que par exemple le diazote ou le dioxyde de carbone, ou un hydrocarbure, chloroflurocarbure, hydrochlorocarbure, hydrofluorocarbure ou hydrochlorofluorocarbure (saturé ou insaturé). Par exemple le butane ou le pentane peuvent être utilisés.

Un agent d'expansion physique est mélangé avec le copolymère sous forme liquide ou supercritique, puis converti en phase gazeuse lors de l'étape de moussage.

Selon un mode de réalisation préféré, le mélange du copolymère et de l'agent d'expansion est injecté dans un moule, et le moussage est produit par l'ouverture du moule. Cette technique permet de produire directement des objets moussés tridimensionnels aux géométries complexes.

Il s'agit également d'une technique relativement simple à mettre en oeuvre, notamment par rapport à certains procédés de fusion de particules moussées tels que décrits dans l'art antérieur : en effet, le remplissage du moule par des granulés moussés de polymère puis la fusion des particules pour assurer une tenue mécanique des pièces sans détruire la structure de la mousse sont des opérations complexes.

D'autres techniques de moussage utilisables sont notamment le moussage en « batch » et le moussage en extrusion.

La mousse produite selon l'invention présente de préférence une densité de 50 à 800 $kg/m^3$, et de manière plus particulièrement préférée de 100 à 600 $kg/m^3$. Le contrôle de la densité peut être réalisé par une adaptation des paramètres du procédé de fabrication.

De préférence, cette mousse présente une résilience de rebondissement, selon la norme ISO 8307, supérieure ou égale à 55 %.

De préférence, cette mousse présente une déformation rémanente en compression, selon la norme ISO 7214, inférieure ou égale à 10 %, et de manière plus particulièrement préférée inférieure ou égale à 8 %.

De préférence, cette mousse présente également d'excellentes propriétés de tenue en fatigue et d'amortissement.

La mousse selon l'invention peut être utilisée pour fabriquer des équipements de sport, tels que des semelles de chaussures de sport, de chaussures de ski, des semelles intermédiaires, des semelles intérieures, ou encore des composants fonctionnels de semelles, sous forme d'inserts dans différentes parties de la semelle (talon ou voûte plantaire par exemple), ou encore des composants des dessus de chaussures sous forme de renforts ou d'inserts dans la structure du dessus de chaussure, sous forme de protections.

Elle peut également être utilisée pour fabriquer des ballons, des gants de sport (par exemple des gants de football), des composants de balles de golf, des raquettes, des éléments de protection (gilets, éléments intérieurs de casques, de coques...).

La mousse selon l'invention présente des propriétés anti-chocs, anti-vibrations et anti-bruit intéressantes, combinés avec des propriétés haptiques adaptées aux biens d'équipements. Elle peut donc aussi être utilisée pour la fabrication de semelles de rails de chemin de fer, ou de diverses pièces dans l'industrie automobile, dans les transports, dans les équipements électriques et électroniques, dans la construction ou dans l'industrie manufacturière.

Un avantage des objets en mousse selon l'invention est qu'ils peuvent être aisément recyclés, par exemple en les fondant dans une extrudeuse équipée d'une sortie de dégazage (optionnellement après les avoir découpés en morceaux).

## EXEMPLES

Les exemples suivants illustrent l'invention sans la limiter.

### Exemple 1

Différents copolymères PEBA ont été testés, dont les caractéristiques sont résumées dans le tableau ci-dessous :

| PEBA N° | A | B | C | D | E | F |
|---|---|---|---|---|---|---|
| Tf (en °C) | 144 | 135 | 150 | 142 | 160 | 147 |
| Tc (en °C) | 61 | 63 | 75 | 71 | 88 | 80 |
| Dureté instantanée (en Shore D) | 33 | 32 | 33 | 32 | 42 | 46 |
| Dureté à 15 s (en Shore D) | 25 | 25 | - | - | 35 | 41 |
| Nature des blocs PA | PA 12 | PA 11 | PA 12 | PA 11 | PA 12 | PA 12 |
| Ratio massique blocs PA/blocs PE | 0,4 | 0,6 | 0,4 | 0,6 | 1 | 1 |
| $M_n$ blocs PA (en g/mol) | 850 | 600 | 850 | 600 | 2000 | 1000 |
| $M_n$ blocs PE (en g/mol) | 2000 | 1000 | 2000 | 1000 | 2000 | 1000 |

Tf désigne la température de fusion du copolymère, et Tc désigne sa température de cristallisation. Les blocs polyéthers sont des blocs de PTMG pour l'ensemble de ces copolymères.

Les copolymères A à D sont selon l'invention, et les copolymères E et F correspondent à des exemples comparatifs.

Des mousses sont fabriquées à partir des copolymères A à F au moyen d'une presse à injecter Arburg Allrounder 270C, avec un système d'injection d'un agent d'expansion physique de type Trexel series II. Les paramètres opératoires sont les suivants :

- Température du fourreau : 160 à 210°C.
- Vitesse d'injection : 112 cm/s.
- Temps de maintien avant ouverture du moule : 25 à 40 s.
- Temps de refroidissement : 120 à 180 s.
- Température du moule : 60 à 80°C.
- Longueur d'ouverture du moule : jusqu'à 12 mm.
- Vitesse d'ouverture du moule. 50 mm/s.
- Temps de cycle total : 145 à 220 s.

L'agent moussant utilisé est du diazote introduit à hauteur de 0,6 % en poids.

On utilise également en tant que témoins une mousse en polyuréthane thermoplastique de la marque Infinergy (BASF), ainsi qu'une mousse d'EVA réticulée.

Différentes propriétés des mousses obtenues sont évaluées :
- densité : selon la norme ISO 845 ;
- résilience de rebondissement : selon la norme ISO 8307 (une bille d'acier de 16,8 g et de diamètre 16 mm est lâchée

d'une hauteur de 500 mm sur un échantillon de mousse, la résilience de rebondissement correspond alors au pourcentage d'énergie restituée à la bille, ou pourcentage de la hauteur initiale atteinte par la bille au rebond) ;
- déformation rémanente en compression : on effectue une mesure consistant à comprimer un échantillon à un taux de déformation et pendant un temps donnés, puis à relâcher la contrainte relâchée, et à noter déformation résiduelle après un temps de recouvrance ; la mesure est adaptée à partir de la norme ISO 7214, avec une déformation de 50 %, un temps de maintien de 22 h, une température de 23°C, et en effectuant une mesure après 30 min et une autre mesure après 24 h de recouvrance.

| Polymère | Densité (kg/m$^3$) | Résilience au Rebond (%) | DRC à 30 min (%) | DRC à 24h (%) |
|---|---|---|---|---|
| PEBA N°A | 200 | 61,5 | | 4,5 |
| PEBA N°C | 220 | 64 | | 2,5 |
| PEBA N°B | 200 | 65 | 7,5 | 4,5 |
| PEBA N°B | 300 | 66 | 8 | 5 |
| PEBA N°B | 400 | 61 | 6 | 5 |
| PEBA N°D | 220 | 63 | | 4 |
| PEBA N°E | 280 | 51 | | 5 |
| PEBA N°F | 240 | 54 | | 4,5 |
| TPU | 140 | 63 | 18 | 1 |
| EVA | 160 | 34 | 24 | |

Exemple 2

Dans cet exemple, on réalise un test de fatigue en compression sur la mousse fabriquée avec le PEBA n°B à 200 kg/m$^3$ ainsi que sur une mousse TPU témoin.
Le test de fatigue est effectué à une fréquence de 1,5 Hz sur un échantillon de 50 mm de diamètre et d'environ 15 mm d'épaisseur. On applique une contrainte qui varie selon un signal sinusoïdal entre 0 et 360 kPa ou entre 0 et 720 kPa, au moyen d'un dynamomètre hydraulique (MTS810). Après 350 000 cycles, on mesure l'évolution de l'épaisseur de l'échantillon qui reprend sa forme initiale au cours du temps. Un matériau idéal reviendrait instantanément à sa forme initiale. Les mousses actuellement utilisées ont une déformation résiduelle de l'ordre de 10 % après plusieurs jours de relaxation.
Ce test de fatigue reproduit bien les sollicitations mécaniques auxquelles est confronté un échantillon de mousse, en particulier dans des applications telles que les semelles de chaussures de sport.
Les résultats sont illustrés sur la **figure 1.** La courbe marquée avec des carrés blancs correspond à la mousse témoin testée à 720 kPa. La courbe marquée avec les ronds blancs correspond à la mousse selon l'invention testée à 720 kPa. La courbe marquée avec les ronds noirs correspond à la mousse témoin testée à 360 kPa. La courbe marquée avec les croix grises correspond à la mousse selon l'invention testée à 360 kPa.
On constate que la mousse selon l'invention retrouve sa forme initiale (niveau de déformation résiduel minimum) plus rapidement que la mousse témoin.

**Revendications**

1. Mousse de copolymère à blocs polyamides et à blocs polyéthers non réticulé, dans laquelle :

   - les blocs polyamides du copolymère ont une masse molaire moyenne en nombre de 200 à 1500 g/mol ;
   - les blocs polyéthers du copolymère ont une masse molaire moyenne en nombre de 800 à 2500 g/mol ; et
   - le rapport massique des blocs polyamides par rapport aux blocs polyéthers du copolymère est de 0,1 à 0,7, le rapport massique étant calculé en divisant la masse molaire moyenne en nombre des blocs polyamides par la masse molaire moyenne en nombre des blocs polyéthers.

2. Mousse selon la revendication 1, dans laquelle :

- les blocs polyamides du copolymère ont une masse molaire moyenne en nombre de 400 à 1000 g/mol, de préférence de 600 à 850 g/mol ;
- les blocs polyéthers du copolymère ont une masse molaire moyenne en nombre de 1000 à 2000 g/mol ; et
- le rapport massique des blocs polyamides par rapport aux blocs polyéthers du copolymère est de 0,3 à 0,6.

**3.** Mousse selon la revendication 1 ou 2, dans laquelle les blocs polyamides du copolymère sont des blocs de polyamide 11, ou de polyamide 12, ou de polyamide 6, ou de polyamide 6.10.

**4.** Mousse selon l'une des revendications 1 à 3, dans laquelle les blocs polyéthers du copolymère sont des blocs de polyéthylène glycol ou de polytétrahydrofurane.

**5.** Mousse selon l'une des revendications 1 à 4, qui présente une densité inférieure ou égale à 800 kg/$m^3$, de préférence inférieure ou égale à 600 kg/$m^3$, de manière plus particulièrement préférée inférieure ou égale à 400 kg/$m^3$, voire inférieure ou égale à 300 kg/$m^3$.

**6.** Mousse selon l'une des revendications 1 à 5, qui contient également un ou plusieurs additifs, de préférence choisis parmi les copolymères d'éthylène et acétate de vinyle et les copolymères d'éthylène et d'alkyl(méth)acrylate.

**7.** Procédé de fabrication d'une mousse selon l'une des revendications 1 à 6, comprenant une étape de mélange du copolymère à l'état fondu, éventuellement avec un ou des additifs, et avec un agent d'expansion, et une étape de moussage du mélange de copolymère et d'agent d'expansion.

**8.** Procédé selon la revendication 7, dans lequel l'agent d'expansion est un agent d'expansion physique, de préférence choisi parmi le diazote, le dioxyde de carbone, les hydrocarbures, les chloroflurocarbures, les hydrochlorocarbures, les hydrofluorocarbures et les hydrochlorofluorocarbures.

**9.** Procédé selon l'une des revendications 7 ou 8, comprenant une étape d'injection du mélange de copolymère et d'agent d'expansion dans un moule, le moussage du mélange étant effectué par l'ouverture du moule.

**10.** Article constitué d'une mousse selon l'une des revendications 1 à 6.

**11.** Article comprenant au moins un élément constitué d'une mousse selon l'une des revendications 1 à 6.

**12.** Article selon l'une des revendications 10 ou 11, qui est choisi parmi les semelles de chaussures de sport, les ballons ou balles, les gants, les équipements de protection individuels, les semelles pour rails, les pièces automobiles, les pièces de construction et les pièces d'équipements électriques et électroniques.

## Patentansprüche

**1.** Nicht vernetzter Polyamid- und Polyetherblock-Copolymerschaumstoff, wobei:

- die Polyamidblöcke des Copolymers eine zahlenmittlere Molmasse von 200 bis 1500 g/mol aufweisen;
- die Polyetherblöcke des Copolymers eine zahlenmittlere Molmasse von 800 bis 2500 g/mol aufweisen;
- das Massenverhältnis der Polyamidblöcke in Bezug auf die Polyetherblöcke des Copolymers 0,1 bis 0,7 ist, wobei das Massenverhältnis durch Teilen der zahlenmittlere Molmasse der Polyamidblöcke durch die zahlenmittlere Molmasse der Polyetherblöcke berechnet wird.

**2.** Schaumstoff nach Anspruch 1, wobei:

- die Polyamidblöcke des Copolymers eine zahlenmittlere Molmasse von 400 bis 1000 g/mol, vorzugsweise von 600 bis 850 g/mol, aufweisen;
- die Polyetherblöcke des Copolymers eine zahlenmittlere Molmasse von 1000 bis 2000 g/mol aufweisen;
- das Massenverhältnis der Polyamidblöcke in Bezug auf die Polyetherblöcke des Copolymers 0,3 bis 0,6 ist.

**3.** Schaumstoff nach Anspruch 1 oder 2, wobei die Polyamidblöcke des Copolymers Polyamidblöcke aus Polyamid 11 oder Polyamid 12 oder Polyamid 6 oder Polyamid 6.10 sind.

4. Schaumstoff nach einem der Ansprüche 1 bis 3, wobei die Polyetherblöcke des Copolymers Polyethylenglykol- oder Polytetrahydrofuranblöcke sind.

5. Schaumstoff nach einem der Ansprüche 1 bis 4, der eine Dichte von weniger als oder gleich wie 800 kg/$m^3$, vorzugsweise von weniger als oder gleich wie 600 kg/$m^3$, bevorzugter von weniger als oder gleich wie 400 kg/$m^3$ oder sogar von weniger als oder gleich wie 300 kg/$m^3$ aufweist.

6. Schaumstoff nach einem der Ansprüche 1 bis 5, der auch ein oder mehrere Additive enthält, vorzugsweise ausgewählt aus Ethylen-Vinylacetat-Copolymeren und Ethylen-Alkyl(meth)acrylat-Copolymeren.

7. Herstellungsverfahren eines Schaumstoffs nach einem der Ansprüche 1 bis 6, umfassend einen Schritt eines Mischens des Copolymers in geschmolzenem Zustand, gegebenenfalls mit einem oder mehreren Additiven, und mit einem Treibmittel, und einen Schritt eines Aufschäumens des Gemischs aus Copolymer und Treibmittel.

8. Verfahren nach Anspruch 7, wobei das Treibmittel ein physikalisches Treibmittel ist, vorzugsweise ausgewählt aus Distickstoff, Kohlendioxid, Kohlenwasserstoffen, Chlorflurkohlenwasserstoffen, Hydrochlorkohlenwasserstoffen, Hydrofluorkohlenwasserstoffen und Hydrochlorfluorkohlenwasserstoffen.

9. Verfahren nach einem der Ansprüche 7 oder 8, umfassend einen Schritt eines Einspritzens des Gemischs aus Copolymer und Treibmittel in eine Form, wobei das Aufschäumen des Gemischs durch das Öffnen der Form erfolgt.

10. Gegenstand, bestehend aus einem Schaumstoff nach einem der Ansprüche 1 bis 6.

11. Gegenstand, umfassend mindestens ein Element, bestehend aus einem Schaumstoff nach einem der Ansprüche 1 bis 6.

12. Gegenstand nach einem der Ansprüche 10 oder 11, der ausgewählt ist aus Sohlen für Sportschuhe, Bällen oder Kugeln, Handschuhen, persönlicher Schutzausrüstung, Sohlen für Schienen, Automobilteilen, Teilen für den Bau und Teilen für elektrische und elektronische Ausrüstungen.

## Claims

1. A foam of non-crosslinked polyamide polyether block copolymer, wherein:

- the polyamide blocks of the copolymer have a number average molecular weight of from 200 to 1500 g/mol;
- the polyether blocks of the copolymer have a number average molecular weight of from 800 to 2500 g/mol; and
- the mass ratio of the polyamide blocks relative to the polyether blocks of the copolymer is from 0.1 to 0.7, the mass ratio being calculated by dividing the number average molecular weight of the polyamide blocks by the number average molecular weight of the polyether blocks.

2. The foam according to claim 1, wherein:

- the polyamide blocks of the copolymer have a number average molecular weight of from 400 to 1000 g/mol, preferably from 600 to 850 g/mol;
- the polyether blocks of the copolymer have a number average molecular weight of from 1000 to 2000 g/mol; and
- the mass ratio of the polyamide blocks relative to the polyether blocks of the copolymer is from 0.3 to 0.6.

3. The foam according to claim 1 or 2, wherein the polyamide blocks of the copolymer are blocks of polyamide 11, or of polyamide 12, or of polyamide 6, or of polyamide 6.10.

4. The foam according to one of claims 1 to 3, wherein the polyether blocks of the copolymer are blocks of polyethylene glycol or of polytetrahydrofuran.

5. The foam according to one of claims 1 to 4, which has a density less than or equal to 800 kg/$m^3$, preferably less than or equal to 600 kg/$m^3$, more particularly preferably less than or equal to 400 kg/$m^3$, or even less than or equal to 300 kg/$m^3$.

6. The foam according to one of claims 1 to 5, which also contains one or more additives, preferably selected from copolymers of ethylene and vinyl acetate and copolymers of ethylene and of alkyl(meth)acrylate.

7. A method for manufacturing a foam according to one of claims 1 to 6, comprising a step of mixing the copolymer in the molten state, optionally with one or more additives, and with an expansion agent, and a step of foaming the copolymer and expansion agent mixture.

8. The method according to claim 7, wherein the expansion agent is a physical expansion agent, preferably selected from dinitrogen, carbon dioxide, hydrocarbons, chlorofluorocarbons, hydrochlorocarbons, hydrofluorocarbons and hydrochlorofluorocarbons.

9. The method according to one of claims 7 or 8, comprising a step of injecting the mixture of copolymer and expansion agent in a mold, wherein the foaming of the mixture is carried out by the opening of the mold.

10. An article consisting of a foam according to one of claims 1 to 6.

11. An article comprising at least one element consisting of a foam according to one of claims 1 to 6.

12. The article according to one of claims 10 or 11, which is selected from soles of sports shoes, balls, gloves, personal protective equipment, pads for rails, automobile parts, construction parts and parts of electrical and electronic equipment.

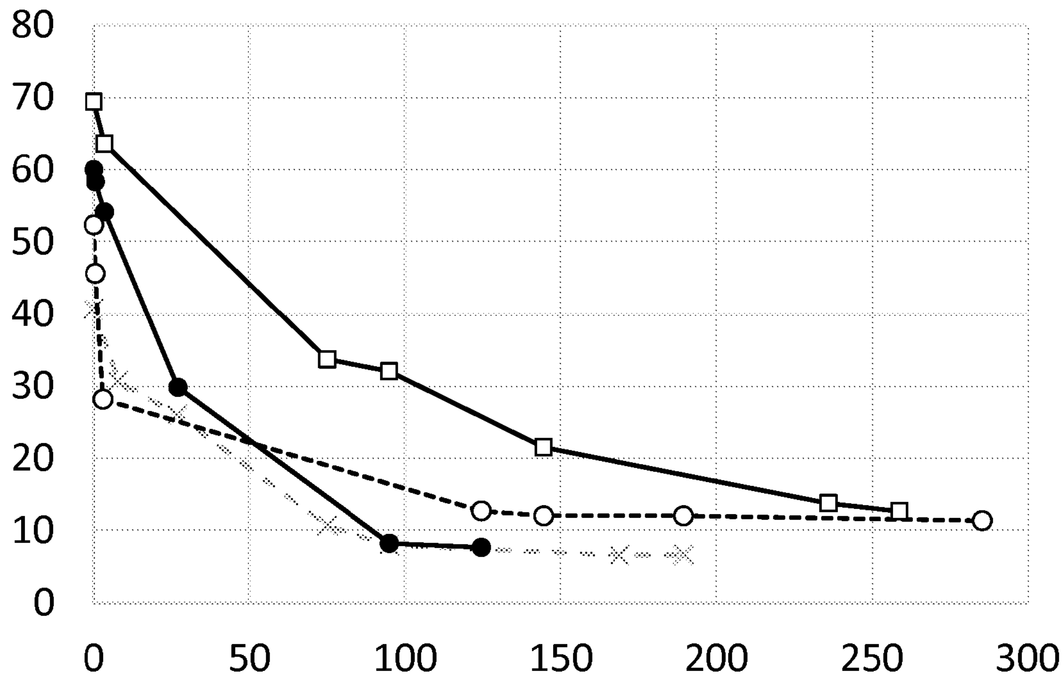


Fig. 1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 0405227 A
- EP 0402883 A
- EP 1650255 A
- WO 2013148841 A
- WO 2015052265 A
- EP 613919 A
- JP 2004346274 B
- JP 2004352794 B
- EP 1482011 A
- FR 2846332